# EUROPEAN PATENT SPECIFICATION

(11) **EP 4 326 555 B1**
(45) Date of publication and mention of the grant of the patent: **30.07.2025**
(21) Application number: 22721246.1
(22) Date of filing: 13.04.2022
(51) Int. Cl.: B32B 38/00, B21D 51/26, B21D 35/00

(54) **LAMINATED CAN END STOCK**
LAMINIERTES DOSENENDMATERIAL
BANDE STRATIFIÉE POUR TÔLE POUR EXTRÉMITÉS DE CANETTES

(30) Priority: 22.04.2021 US 202163178323 P
(43) Date of publication of application: 28.02.2024
(73) Proprietor: Novelis Inc., Atlanta, GA 30326 (US)
(72) Inventor: PAPE, Jan-Tobias, Kennesaw, Georgia 30144 (US); TUSSING, Christian, Kennesaw, Georgia 30144 (US); VON ZWEHL, Burkhard, Kennesaw, Georgia 30144 (US); MANGELS, Markus, Kennesaw, Georgia 30144 (US); SCHROEDER, Cornelia, Kennesaw, Georgia 30144 (US)
(74) Representative: Weickmann & Weickmann PartmbB
(86) International application number: PCT/US2022/071695
(87) International publication number: WO 2022/226470

(56) References cited:
- US-A- 4 828 136
- US-A- 5 139 889
- US-A1- 2017 326 862
- US-A1- 2019 291 924
- US-A1- 2019 351 652
- US-A1- 2020 207 063
- US-B2- 10 836 150

## Description

### FIELD

The present disclosure relates generally to metalworking and, more specifically, to laminated metal strips suitable for use as can end stock and to their production.

### BACKGROUND

Certain metal products, such as aluminum beverage cans, may require or otherwise benefit from a protective layer between the metal and its contents. For example, beverage cans often must provide sufficient protection between the metal of the beverage can and the beverage contained therein to avoid damage to the metal from harsh beverages, such as sodas and colas, as well as to avoid undesirable effects to the beverage, such as discoloration or change in taste. Furthermore, metal products may further benefit from a protective layer between the metal and the exterior environment. A protective layer on the exterior of beverage cans, for example, may protect the beverage can from abrasion or other damage during production processes. The protective layer on the exterior of beverage cans may also be necessary or beneficial in applying an exterior design on the beverage can.

US 2017/0326862 A1 is directed to a method for preparing can end stock comprising pre-heating a metal strip to a first temperature below 250° C, laminating a polymer film to a first side of the metal strip to produce a laminated metal strip, wherein a main component of the polymer film has a melting temperature above the first temperature, and annealing the laminated metal strip at an annealing temperature, wherein the annealing temperature is higher than the melting temperature of the polymer film. US 2020/0207063 A1 is directed to a process for preparing can end stock comprising applying a copolymer adhesion promoter solution to a first side of a metal strip, drying the copolymer adhesion promoter solution to provide a copolymer adhesion promoter film on the first side of the metal strip, curing the copolymer adhesion promoter film on the first side of the metal strip, laminating a polymer film to the copolymer adhesion promoter film on the first side of the metal strip to produce a laminated metal strip, and annealing the laminated metal strip at an annealing temperature. US 2019/0291924 A1 is directed to a method for coating a substrate made of an aluminum alloy in the AA3000 or AA5000 series, comprising the following steps: a) coating by (co-)extrusion of a polypropylene modified by maleic anhydride adhesion layer on each face of said substrate, and a surface layer made of polypropylene comprising at least one slip agent, so as to form a metalloplastic strip, b) calendering said metalloplastic strip, c) heat treatment of said metalloplastic strip, d) cooling of the metalloplastic strip, to obtain an H48 metallurgical temper and a coefficient of friction of 0.06 or less. The method is particularly suitable for the fabrication of food packaging and particularly for beverage can lids. US 10,836,150 B2 is directed to a method for preparing a metal product comprising applying a polymer film to a surface of a metal substrate, then applying a layer of wax to an outer layer of the polymer film at a coating weight of from 10 mg/m² to less than 20 mg/m² and at a thickness of from 25 nm to 100 nm, and heating the polymer film and the layer of wax to a temperature above a melting temperature of the polymer film to result in the metal product, wherein the temperature above the melting temperature of the polymer film is greater than 255° C, and wherein the metal product resulting from the heating step comprises the polymer film applied to the surface of the metal substrate and the layer of wax adhered to the outer layer of the polymer film. US 2019/0351652 A1 is directed to a laminate aluminium/multilayer biaxially oriented polyester film with successively: M-an aluminum support; C-an amorphous layer C having a copolyester PET-G-which the diol units include Ethylene Glycol EG-units and CycloHexaneDiMethanol CHDM-units; B-a crystallizable layer B having a copolyester PET-X which the diol units include Ethylene Glycol EG-units and which the acid units include Terephtalic Acid TA-units and units of at least one Dicarboxylic Acid Different From Terephtalic Acid [DADFTA units], the DADFTA units being chosen in the group consisting of Isophtalic Acid IA-units, Sebacic Acid SA-units, Adipic Acid AA-units, and mixtures thereof; and possibly a polyester PolyEthyleneTerephtalate PET; A-optionally a layer A, identical or different from the layer B, wherein i. the concentration of the CHDM units in the layer C has between 18 and 34 mol %, and ii. the melting temperature of the layer B is comprised between 180 and 245° C. US 4,828,136 is directed to a can for canning obtained by seaming a body member and an easily openable closure formed from an aluminum material, said easily openable closure being composed of an aluminum substrate having a score formed so as to reach halfway in the thickness direction of the aluminum substrate, an inside surface material of a crystalline thermoplastic resin film having a tensile strength of 3 to 25 kg/mm² provided on that surface of the aluminum substrate which faces the inside surface of the can, a layer of an adhesive and/or an adhesion promoting agent interposed between the substrate and the inside surface material and bonding the substrate and the inside surface material with an adhesion strength of at least 3 kg/15 mm width, and a layer of an epoxy-type thermosetting resin film containing a lubricant applied to the surface of the inside surface material. US 5,139,889 is directed to a thickness-reduced deep-draw-formed can, which is prepared by subjecting a resin-coated structure of a surface-treated steel plate comprising, as the substrate, a cold-rolled steel plate having a carbon content in the steel of 0.04 to 0.15% by weight and a manganese content in the steel of 0.3 to 1.0% by weight, an average crystal grain size not larger than 6.0 µm and a tensile strength of from 65 to 80 kg/mm², to reduction of the thickness and deep-draw-forming.

There are often requirements placed on the protective layers on both the interior and exterior surfaces of metal products. For example, the protective layer must adequately adhere to the metal product. On the exterior surface, by way of further example, the protective layer must typically demonstrate a homogenous color after lamination, resistance to abrasion, appropriate opening behavior, and appropriate general behavior during end manufacturing. Conventional protective layers, such as lacquer, have been found to demonstrate inadequate abrasion resistance. Previously attempted alternatives to the conventional protective layers, meanwhile, have been found to exhibit undesirable hairing and feathering. Furthermore, conventional protective layers have exhibited inadequate adhesion to the metal product and require costly and time-intensive production processes. Thus, conventional protective layers are ineffective.

### SUMMARY

The invention is defined in the appended claims. The present invention provides a process for preparing can end stock according to claim 1.

In a second aspect, the present invention provides a can end stock product prepared according to the processes of the invention. In some cases, the first side of the metal strip corresponds to an exterior-facing side of the can end stock product. In some cases, the polymer film has a thickness less than 150 µm.

In a third aspect, the present invention provides a beverage can comprising a body piece and an end cap, wherein the end cap is formed from can end stock prepared according to the process of the invention.

Described herein is a system (not according to the present invention), comprising: a pre-heating oven for accepting a metal strip and pre-heating the metal strip to a pre-heating temperature; a lamination system positioned downstream of the pre-heating oven for accepting the metal strip at the pre-heating temperature and applying a polymer film to a first side of the metal strip, wherein the first side of the metal strip corresponds to an exterior-facing side of a can end formed from the metal strip; and an annealing oven positioned downstream of the lamination system for accepting a laminated metal strip and heating the laminated metal strip at an annealing temperature, wherein the annealing temperature is greater than 200 °C. In some cases, the metal strip is an aluminum strip. In some cases, the system further comprises an adhesion coating application system for applying an adhesion coating to the metal strip, wherein the lamination system is configured to apply the polymer film to the adhesion coating. In some cases, the lamination system is coupled to a supply of polyethylene terephthalate film. In some cases, the system further comprises a lacquer application system for applying a layer of lacquer to a second side of the metal strip. In some cases, the annealing temperature is greater than 225 °C. In some cases, the annealing temperature is less than 300 °C.

### BRIEF DESCRIPTION OF THE DRAWINGS

The disclosure is described in detail below with reference to the appended drawings, wherein like numerals designate similar parts.
FIG. 1 is a schematic diagram of a system for preparing can end stock according to certain aspects of the present disclosure.
FIG. 2 is a close-up side view of the can end stock of FIG. 1.
FIG. 3A is a sheet of can end stock according to certain aspects of the present disclosure.
FIG. 3B depicts the sheet of can end stock of FIG. 3A after being cut according to certain aspects of the present disclosure.
FIG. 3C depicts a set of can end blanks produced from the sheet of can end stock of FIG. 3A according to certain aspects of the present disclosure.
FIG. 3D depicts a beverage can including a can end formed from a can end blank from FIG. 3C according to certain aspects of the present disclosure.
FIG. 4 is an isometric cutaway diagram depicting the multiple layers of a section of can end stock according to certain aspects of the present disclosure.
FIG. 5 is a flowchart depicting a process for preparing a can end stock according to certain aspects of the present disclosure.
FIG. 6 is a schematic diagram of a lamination system according to certain aspects of the present disclosure.

### DETAILED DESCRIPTION

Described herein are processes for producing can end stock from a metal strip, i.e. an aluminum strip. In the processes described herein, a polymer film, i.e. a polyethylene terephthalate film, is laminated to an exterior side of the metal strip. The resultant can end stock can be used, for example, in beverage cans.

The can end stock produced according the methods described herein advantageously exhibit improved properties. In particular, the can end stock exhibits improved resistance to abrasion. Furthermore, the can end stock described herein has been specifically developed to exhibit low feathering and low hairing in addition to high abrasion resistance. As described below, feathering and hairing were issues encountered in the development of abrasion resistant can end stock. The can end stock described herein achieves all three of abrasion resistance, low feather, and low hairing.

In addition, the methods described herein may provide a more efficient means of applying protective film(s) to a metal strip. Conventional processes often require multiple process steps. In some cases, conventional processes apply consecutive layers of lacquer for differing purposes. For example, a protective lacquer layer and a distinct colored lacquer layer. The methods described herein, on the other hand, can accomplish both protection and display (e.g., coloration) in a single layer. Furthermore, the methods described herein may not require a drying step (e.g., to remove solvents from a lacquer layer applied to an exterior surface of the metal strip). These improvements save both time and expense.

### Definitions and Descriptions

As used herein, the terms "invention," "the invention," "this invention" and "the present invention" are intended to refer to the subject matter in the claims below.

In this description, reference is made to alloys identified by aluminum industry designations, such as "series" or "7xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

Aluminum alloys are described herein in terms of their elemental composition in weight percentage (wt. %) based on the total weight of the alloy. In certain examples of each alloy, the remainder is aluminum, with a maximum wt. % of 0.15 % for the sum of the impurities.

As used herein, "feathering" refers to the elongation and delamination of in a protective layer (e.g., polymer film) on the metal strip. The extent of feathering is measured by the amount of the protective layer (e.g., polymer film) that extends over the cut aluminum edge as a result of elongation and delamination. Can end stock is especially susceptible to feathering when cutting a disc from the can end stock to produce a can end. In addition, feathering is a risk at breaks in the metal, such as the orifice created when opening a beverage can.

As used herein, "hairing" refers to the formation of visible hair-like deformations in a protective layer (e.g., polymer film) on the metal strip. Can end stock is especially susceptible to hairing when cutting through the protective layer (e.g., polymer film), such as to create a score line. In some cases, hairing is a result of poor adhesion of the protective layer to the metal strip.

Reference is made in this application to alloy condition or temper. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. A T1 condition or temper refers to an aluminum alloy cooled from hot working and naturally aged (e.g., at room temperature). A T2 condition or temper refers to an aluminum alloy cooled from hot working, cold worked, and naturally aged. A T3 condition or temper refers to an aluminum alloy solution heat treated, cold worked, and naturally aged. A T4 condition or temper refers to an aluminum alloy solution heat treated and naturally aged. A T5 condition or temper refers to an aluminum alloy cooled from hot working and artificially aged (at elevated temperatures). A T6 condition or temper refers to an aluminum alloy solution heat treated and artificially aged. A T7 condition or temper refers to an aluminum alloy solution heat treated and artificially overaged. A T8x condition or temper refers to an aluminum alloy solution heat treated, cold worked, and artificially aged. A T9 condition or temper refers to an aluminum alloy solution heat treated, artificially aged, and cold worked.

As used herein, the meaning of "a," "an," or "the" includes singular and plural references unless the context clearly dictates otherwise.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10.

### Metal Strip

The present disclosure provides processes for producing can end stock from a metal strip. More specifically, the methods described herein include laminating a polymer film to a first side of the metal strip. The composition of the metal strip on which the polymer film is laminated is not limited. The methods described herein are for aluminum strips. The polymer film may be applied, for example, to any suitable aluminum alloy, such as a continuous coil of an aluminum alloy. Suitable aluminum alloys include, for example, 1xxx series aluminum alloys, 2xxx series aluminum alloys, 3xxx series aluminum alloys, 4xxx series aluminum alloys, 5xxx series aluminum alloys, 6xxx series aluminum alloys, 7xxx series aluminum alloys, and 8xxx series aluminum alloys.

By way of non-limiting example, exemplary 1xxx series aluminum alloys for use as the metal strip can include AA1100, AA1100A, AA1200, AA1200A, AA1300, AA1110, AA1120, AA1230, AA1230A, AA1235, AA1435, AA1145, AA1345, AA1445, AA1150, AA1350, AA1350A, AA1450, AA1370, AA1275, AA1185, AA1285, AA1385, AA1188, AA1190, AA1290, AA1193, AA1198, or AA1199. In some cases, the aluminum alloy is at least 99.9 % pure aluminum (e.g., at least 99.91 %, at least 99.92 %, at least 99.93 %, at least 99.94 %, at least 99.95 %, at least 99.96 %, at least 99.97 %, at least 99.98 %, or at least 99.99 % pure aluminum).

Non-limiting exemplary 2xxx series aluminum alloys for use as the metal strip can include AA2001, AA2002, AA2004, AA2005, AA2006, AA2007, AA2007A, AA2007B, AA2008, AA2009, AA2010, AA2011, AA2011A, AA2111, AA2111A, AA2111B, AA2012, AA2013, AA2014, AA2014A, AA2214, AA2015, AA2016, AA2017, AA2017A, AA2117, AA2018, AA2218, AA2618, AA2618A, AA2219, AA2319, AA2419, AA2519, AA2021, AA2022, AA2023, AA2024, AA2024A, AA2124, AA2224, AA2224A, AA2324, AA2424, AA2524, AA2624, AA2724, AA2824, AA2025, AA2026, AA2027, AA2028, AA2028A, AA2028B, AA2028C, AA2029, AA2030, AA2031, AA2032, AA2034, AA2036, AA2037, AA2038, AA2039, AA2139, AA2040, AA2041, AA2044, AA2045, AA2050, AA2055, AA2056, AA2060, AA2065, AA2070, AA2076, AA2090, AA2091, AA2094, AA2095, AA2195, AA2295, AA2196, AA2296, AA2097, AA2197, AA2297, AA2397, AA2098, AA2198, AA2099, or AA2199.

Non-limiting exemplary 3xxx series aluminum alloys for use as the metal strip can include AA3002, AA3102, AA3003, AA3103, AA3103A, AA3103B, AA3203, AA3403, AA3004, AA3004A, AA3104, AA3204, AA3304, AA3005, AA3005A, AA3105, AA3105A, AA3105B, AA3007, AA3107, AA3207, AA3207A, AA3307, AA3009, AA3010, AA3110, AA3011, AA3012, AA3012A, AA3013, AA3014, AA3015, AA3016, AA3017, AA3019, AA3020, AA3021, AA3025, AA3026, AA3030, AA3130, or AA3065.

Non-limiting exemplary 4xxx series aluminum alloys for use as the metal strip can include AA4004, AA4104, AA4006, AA4007, AA4008, AA4009, AA4010, AA4013, AA4014, AA4015, AA4015A, AA4115, AA4016, AA4017, AA4018, AA4019, AA4020, AA4021, AA4026, AA4032, AA4043, AA4043A, AA4143, AA4343, AA4643, AA4943, AA4044, AA4045, AA4145, AA4145A, AA4046, AA4047, AA4047A, or AA4147.

Non-limiting exemplary 5xxx series aluminum alloys for use as the metal strip can include AA5182, AA5183, AA5005, AA5005A, AA5205, AA5305, AA5505, AA5605, AA5006, AA5106, AA5010, AA5110, AA5110A, AA5210, AA5310, AA5016, AA5017, AA5018, AA5018A, AA5019, AA5019A, AA5119, AA5119A, AA5021, AA5022, AA5023, AA5024, AA5026, AA5027, AA5028, AA5040, AA5140, AA5041, AA5042, AA5043, AA5049, AA5149, AA5249, AA5349, AA5449, AA5449A, AA5050, AA5050A, AA5050C, AA5150, AA5051, AA5051A, AA5151, AA5251, AA5251A, AA5351, AA5451, AA5052, AA5252, AA5352, AA5154, AA5154A, AA5154B, AA5154C, AA5254, AA5354, AA5454, AA5554, AA5654, AA5654A, AA5754, AA5854, AA5954, AA5056, AA5356, AA5356A, AA5456, AA5456A, AA5456B, AA5556, AA5556A, AA5556B, AA5556C, AA5257, AA5457, AA5557, AA5657, AA5058, AA5059, AA5070, AA5180, AA5180A, AA5082, AA5182, AA5083, AA5183, AA5183A, AA5283, AA5283A, AA5283B, AA5383, AA5483, AA5086, AA5186, AA5087, AA5187, or AA5088.

Non-limiting exemplary 6xxx series aluminum alloys for use as the metal strip can include AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6012, AA6012A, AA6013, AA6113, AA6014, AA6015, AA6016, AA6016A, AA6116, AA6018, AA6019, AA6020, AA6021, AA6022, AA6023, AA6024, AA6025, AA6026, AA6027, AA6028, AA6031, AA6032, AA6033, AA6040, AA6041, AA6042, AA6043, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6262, AA6262A, AA6063, AA6063A, AA6463, AA6463A, AA6763, A6963, AA6064, AA6064A, AA6065, AA6066, AA6068, AA6069, AA6070, AA6081, AA6181, AA6181A, AA6082, AA6082A, AA6182, AA6091, or AA6092.

Non-limiting exemplary 7xxx series aluminum alloys for use as the metal strip can include AA7011, AA7019, AA7020, AA7021, AA7039, AA7072, AA7075, AA7085, AA7108, AA7108A, AA7015, AA7017, AA7018, AA7019A, AA7024, AA7025, AA7028, AA7030, AA7031, AA7033, AA7035, AA7035A, AA7046, AA7046A, AA7003, AA7004, AA7005, AA7009, AA7010, AA7011, AA7012, AA7014, AA7016, AA7116, AA7122, AA7023, AA7026, AA7029, AA7129, AA7229, AA7032, AA7033, AA7034, AA7036, AA7136, AA7037, AA7040, AA7140, AA7041, AA7049, AA7049A, AA7149, AA7204, AA7249, AA7349, AA7449, AA7050, AA7050A, AA7150, AA7250, AA7055, AA7155, AA7255, AA7056, AA7060, AA7064, AA7065, AA7068, AA7168, AA7175, AA7475, AA7076, AA7178, AA7278, AA7278A, AA7081, AA7181, AA7185, AA7090, AA7093, AA7095, or AA7099.

Non-limiting exemplary 8xxx series aluminum alloys for use as the metal strip can include AA8005, AA8006, AA8007, AA8008, AA8010, AA8011, AA8011A, AA8111, AA8211, AA8112, AA8014, AA8015, AA8016, AA8017, AA8018, AA8019, AA8021, AA8021A, AA8021B, AA8022, AA8023, AA8024, AA8025, AA8026, AA8030, AA8130, AA8040, AA8050, AA8150, AA8076, AA8076A, AA8176, AA8077, AA8177, AA8079, AA8090, AA8091, and AA8093.

In some embodiments, the metal strip comprises AA3104, AA5006, AA5182, or a combination thereof.

The metal strip is aluminum, or an aluminum alloy. The product may include monolithic materials, as well as non-monolithic materials such as roll-bonded materials, clad materials, composite materials, or various other materials. In some examples, the metal article is a metal coil, a metal strip, a metal plate, a metal sheet, a metal billet, a metal ingot, or the like.

The metal strip can be prepared from an alloy of any suitable temper. In certain examples, the alloys can be used in F, O, T3, T4, T6, or T8x tempers. The alloys can be produced by direct chill casting (including direct chill co-casting) or semi-continuous casting, continuous casting (including, for example, by use of a twin belt caster, a twin roll caster, a block caster, or any other continuous caster), electromagnetic casting, hot top casting, or any other casting method.

### Polymer Film

The processes described herein, and the can end stock produced therefrom, comprise laminating a polymer film to the metal strip. The processes of the present disclosure include laminating the polymer film on a side (e.g., the first side) of the metal strip that corresponds to an exterior-facing side of a can end formed from the metal strip. Thus, the polymer film forms a portion of the public side of the can end stock.

As further detailed in the examples below, the use of a polymer film on an exterior-facing side of a can end (e.g., as opposed to a lacquer) beneficially improves the quality of the can end product. In particular, the polymer film imparts greater resistance to abrasion relative to conventional can end products. Furthermore, the polymer films described herein, in particular the polymer films processed according to the production methods described herein, exhibit reduced feathering and/or hairing.

The polymer film includes polyethylene terephthalate (PET). In some cases, the polymer film laminated to the metal strip is a biaxially oriented polymer, such as a biaxially-oriented polyethylene terephthalate (BoPET) film.

In some embodiments, the polymer film further comprises a colorant, such as a dye or a colorant. Said another way, the polymer film may be a colored polymer film (e.g., a colored PET film). As further detailed in the examples below, the use of colored polymer films has been found to beneficially improve the quality of the can end product. Relative to colorless polymer films, the colored films have been found to exhibit a low tendency for hairing. Without being bound by theory, it is believed that the presence of colorant particles in the film affect the composition of the films so as to facilitate smooth breaking of the film (e.g., at the creation of the orifice when opening a beverage can).

The colorant used in the colored polymer film is not particularly limited. Suitable colorants include, for example, titanium dioxide (e.g., to produce a white polymer film) and carbon black (e.g., to produce a black polymer film).

In some embodiments, the polymer film has an average thickness of from 5 µm to 150 µm, e.g., from 5 µm to 125 µm, from 5 µm to 100 µm, from 5 µm to 75 µm, from 5 µm to 50 µm, from 5 µm to 25 µm, from 6 µm to 150 µm, from 6 µm to 125 µm, from 6 µm to 100 µm, from 6 µm to 75 µm, from 6 µm to 50 µm, from 6 µm to 25 µm, from 8 µm to 150 µm, from 8 µm to 125 µm, from 8 µm to 100 µm, from 8 µm to 75 µm, from 8 µm to 50 µm, from 8 µm to 25 µm, from 10 µm to 150 µm, from 10 µm to 125 µm, from 10 µm to 100 µm, from 10 µm to 75 µm, from 10 µm to 50 µm, from 10 µm to 25 µm, from 12 µm to 150 µm, from 12 µm to 125 µm, from 12 µm to 100 µm, from 12 µm to 75 µm, from 12 µm to 50 µm, or from 12 µm to 25 µm.

In terms of lower limits, the polymer film may have an average thickness greater than 5 µm, e.g., greater than 6 µm, greater than 8 µm, greater than 10 µm, or greater than 12 µm. In terms of upper limits, the polymer film may have an average thickness less than 150 µm, e.g., less than 125 µm, less than 100 µm, less than 75 µm, less than 50 µm, or less than 25 µm.

Examples of suitable average thicknesses of the polymer film include 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, and any thickness therebetween.

In some embodiments, the process of the present disclosure includes laminating multiple layers of polymer film on the metal strip. In these embodiments, each layer of polymer film may independently be a polymer film as described above. In some cases, multiple layers of polymer film are laminated on the metal strip, and each of the layers are identical (e.g., in terms of composition, colorant, and/or thickness). In some cases, multiple layers of polymer film are laminated on the metal strip, and each of the layers are not identical (e.g., in terms of composition, colorant, and/or thickness).

### Adhesion Coating

In some embodiments, the can end stock produced according the present disclosure comprises an adhesion coating. In particular, an adhesion coating may be applied to the metal strip, and the polymer film may be laminated thereon. The adhesion coating beneficially fixes the polymer film to the metal strip.

As illustrated in the below examples, the adhesion coating can provide improved feathering performance. In particular, adhesion of the polymer film to the metal strip can be controlled (e.g., improved) by the selection of an appropriate adhesion coating and by controlling process parameters (such as the annealing temperature, as described below).

In some embodiments, the adhesion coating is a pretreatment applied to the metal strip, e.g., a pretreatment suited to the metal strip. Commercial examples of suitable pretreatments that can be employed as the adhesion coating include Addibond 712 - CP 30 from Solvay (Brussels, Belgium).

### Wax Coating

In some embodiments, the can end stock produced according the present disclosure comprises a wax coating. In some cases, for example, a wax coating may be applied to the external-facing surface of the polymer film. The wax coating beneficially improves the appearance of the can end stock. In particular, a wax coating according to the present disclosure exhibits a homogenous appearance with minimal or no streaking in appearance. In addition, the wax coating acts as lubricant to reduce friction forces on the surface. Lubrication may be necessary to ensure proper function of the machinery used in the production of the can end stock.

The wax coating may comprise a solution of wax, e.g., carnauba wax. Commercial example of suitable wax products that can be employed as the wax coating include LUBA-print 965-A from Münzing (Abstatt, Germany). In some embodiments, the wax coating comprises a dilution of carnauba wax in water. For example, the wax coating may comprise a dilution of carnauba wax (e.g., LUBA-print 965-A) at a volume ratio of from 1:2 to 1:50 (e.g., 1:5, 1:6, 1:8, 1:10, 1:12, 1:14, 1:16, 1:18, or 1:20) with water. Diluting the wax coating ensures that the wax coating can be pumped into a nip during commercial application and mitigate foaming, which has been found to dry and to lead to solid carnauba particles on the surface of the can end stock.

In some embodiments, the wax coating has an average thickness of from 5 mg/m² to 150 mg/m², e.g., from 5 mg/m² to 120 mg/m², from 5 mg/m² to 115 mg/m², from 5 mg/m² to 110 mg/m², from 5 mg/m² to 105 mg/m², from 5 mg/m² to 100 mg/m², from 6 mg/m² to 150 mg/m², from 6 mg/m² to 120 mg/m², from 6 mg/m² to 115 mg/m², from 6 mg/m² to 110 mg/m², from 6 mg/m² to 105 mg/m², from 6 mg/m² to 100 mg/m², from 7 mg/m² to 150 mg/m², from 7 mg/m² to 120 mg/m², from 7 mg/m² to 115 mg/m², from 7 mg/m² to 110 mg/m², from 7 mg/m² to 105 mg/m², from 7 mg/m² to 100 mg/m², from 8 mg/m² to 150 mg/m², from 8 mg/m² to 120 mg/m², from 8 mg/m² to 115 mg/m², from 8 mg/m² to 110 mg/m², from 8 mg/m² to 105 mg/m², from 8 mg/m² to 100 mg/m², from 9 mg/m² to 150 mg/m², from 9 mg/m² to 120 mg/m², from 9 mg/m² to 115 mg/m², from 9 mg/m² to 110 mg/m², from 9 mg/m² to 105 mg/m², from 9 mg/m² to 100 mg/m², from 10 mg/m² to 150 mg/m², from 10 mg/m² to 120 mg/m², from 10 mg/m² to 115 mg/m², from 10 mg/m² to 110 mg/m², from 10 mg/m² to 105 mg/m², or from 10 mg/m² to 100 mg/m².

In terms of lower limits, the wax coating may have an average thickness greater than 5 mg/m², e.g., greater than 6 mg/m², greater than 7 mg/m², greater than 8 mg/m², greater than 9 mg/m², or greater than 10 mg/m². In terms of upper limits, the wax coating may have an average thickness less than 125 mg/m², e.g., less than 120 mg/m², less than 115 mg/m², less than 110 mg/m², less than 105 mg/m², or less than 100 mg/m².

### Lacquer

The can end stock produced according the present disclosure comprises a layer of lacquer. The layer of lacquer is applied to the internal-facing surface of the metal strip. In these embodiments, the lacquer forms a protective layer between the metal strip and the contents of the can end stock (e.g., the contents of a beverage can formed from can end stock).

In some cases, the lacquer comprises a water-based and/or solvent-based composition, which preferably may be sprayed, poured, or otherwise applied to a surface of the metal strip. The lacquer applied to a surface of the metal strip comprises an epoxy-based solution, a polyester solution, or a combination thereof. Commercial examples of compositions suitable for use as a lacquer for the present disclosure include EzDex from Sherwin-Williams (Cleveland, OH).

In some embodiments, the layer of lacquer has an average thickness of from 2 µm to 20 µm, e.g., from 2 µm to 18 µm, from 2 µm to 16 µm, from 2 µm to 14 µm, from 2 µm to 12 µm, from 2 µm to 10 µm, from 3 µm to 20 µm, from 3 µm to 18 µm, from 3 µm to 16 µm, from 3 µm to 14 µm, from 3 µm to 12 µm, from 3 µm to 10 µm, from 4 µm to 20 µm, from 4 µm to 18 µm, from 4 µm to 16 µm, from 4 µm to 14 µm, from 4 µm to 12 µm, from 4 µm to 10 µm, from 5 µm to 20 µm, from 5 µm to 18 µm, from 5 µm to 16 µm, from 5 µm to 14 µm, from 5 µm to 12 µm, from 5 µm to 10 µm, from 6 µm to 20 µm, from 6 µm to 18 µm, from 6 µm to 16 µm, from 6 µm to 14 µm, from 6 µm to 12 µm, or from 6 µm to 10 µm.

In terms of lower limits, the layer of lacquer may have an average thickness greater than 2 µm, e.g., greater than 3 µm, greater than 4 µm, greater than 5 µm, or greater than 6 µm. In terms of upper limits, the layer of lacquer may have an average thickness less than 20 µm, e.g., less than 18 µm, less than 16 µm, less than 14 µm, less than 12 µm, or less than 10 µm.

Examples of suitable average thicknesses of the layer of lacquer include 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, and 20 µm, and any thickness therebetween.

In some cases, the thickness of the layer of lacquer may be expressed in terms of basis weight. In some embodiments, the layer of lacquer has a basis weight of from 1 g/m² to 15 g/m², e.g., from 1 g/m² to 14 g/m², from 1 g/m² to 12 g/m², from 1 g/m² to 10 g/m², from 1 g/m² to 8 g/m², from 1 g/m² to 6 g/m², from 1.5 g/m² to 15 g/m², from 1.5 g/m² to 14 g/m², from 1.5 g/m² to 12 g/m², from 1.5 g/m² to 10 g/m², from 1.5 g/m² to 8 g/m², from 1.5 g/m² to 6 g/m², from 2 g/m² to 15 g/m², from 2 g/m² to 14 g/m², from 2 g/m² to 12 g/m², from 2 g/m² to 10 g/m², from 2 g/m² to 8 g/m², from 2 g/m² to 6 g/m², from 2.5 g/m² to 15 g/m², from 2.5 g/m² to 14 g/m², from 2.5 g/m² to 12 g/m², from 2.5 g/m² to 10 g/m², from 2.5 g/m² to 8 g/m², from 2.5 g/m² to 6 g/m², from 3 g/m² to 15 g/m², from 3 g/m² to 14 g/m², from 3 g/m² to 12 g/m², from 3 g/m² to 10 g/m², from 3 g/m² to 8 g/m², or from 3 g/m² to 6 g/m².

In terms of lower limits, the layer of lacquer may have a basis weight greater than 1 g/m², e.g., greater than 1.5 g/m², greater than 2 g/m², greater than 2.5 g/m², or greater than 3 g/m². In terms of upper limits, the layer of lacquer may have a basis weight less than 15 g/m², e.g., less than 14 g/m², less than 12 g/m², less than 10 g/m², less than 8 g/m², or less than 6 g/m².

Examples of suitable basis weight of the layer of lacquer include 1 g/m², 1.5 g/m², 2 g/m², 2.5 g/m², 3 g/m², 3.5 g/m², 4 g/m², 4.5 g/m², 5 g/m², 5.5 g/m², 6 g/m², 6.5 g/m², 7 g/m², 7.5 g/m², 8 g/m², 9 g/m², 10 g/m², 11 g/m², 12 g/m², 13 g/m², 14 g/m², 15 g/m², and any thickness therebetween.

In some embodiments, the can end stock produced according the present disclosure comprises an adhesion coating between the metal strip and the layer of lacquer. In particular, an adhesion coating may be applied to the metal strip, and the lacquer may be applied thereon. The adhesion coating beneficially fixes the lacquer to the metal strip. In some embodiments, the adhesion coating is a pretreatment applied to the metal strip, e.g., a pretreatment suited to the metal strip. The adhesion coating between the metal strip and layer of lacquer may be the same or different from the adhesion coating between the polymer film and the metal strip. Commercial examples of suitable pretreatments that can be employed as the adhesion coating between the metal strip and the lacquer include titanium zirconium (Ti-Zr) based pretreatments, such as Bonderite from Henkel Adhesive Technologies (Düsseldorf, Germany).

### Process and System for Preparing a Can End Stock

The present disclosure provides processes for preparing can end stock. The processes described herein advantageously produce laminated can end stock having low feathering and low hairing. In some embodiments, the processes described herein produce a laminated can end stock that also exhibits high performance in other testing parameters, such as in an acetic acid test which can assess the corrosion resistance of the laminate against acidic conditions that can result in delamination. These processes include laminating a polymer film to a metal strip and annealing the laminated metal strip at an annealing temperature (T₂), and may further include pre-heating the metal strip to a pre-heating temperature (T₁), before laminating the polymer film to the metal strip. According to the processes of the present disclosure, annealing the laminated metal strip comprises heating to a temperature T₂ that is greater than 175 °C. Without being bound by theory, it is believed that annealing at these temperatures improves the adhesion of the polymer film to the metal strip and thereby greatly improves the performance characteristics of the produced can end stock.

The metal strip is coated on both sides. According to the present disclosure, a metal strip is laminated on one side and lacquered on an opposite side. The metal strip is laminated on an exterior-facing side and lacquered on an interior-facing side. This hybrid laminated/lacquered metal strip can provide improved functional performance on the interior of the can end stock through use of the lacquer while maintaining high cosmetic and functional performance on the exterior of the can end stock through use of a polymer film, which may not be prone to hairing. In some cases, as noted above, the polymer film may comprise additives, such as colorants, which provide a coloration to the film and which have been found to improve the performance characteristics of the can end stock.

In some cases, the laminated metal stock is passed directly from a lamination process into an annealing process (e.g., into an annealing oven). In some cases, the laminated metal stock is passed directly from a lamination process into a lacquer application system and then into an annealing process (e.g., into an annealing oven). In some cases, the laminated metal stock is quenched (e.g., air quenched or water quenched) before entering into the lacquer application system.

In some conventional processes for preparing can end stock, the metal strip is lacquered on both sides. Because the lacquer compositions have a relatively high solvent content, lacquer cannot be applied to both sides of the metal strip and simultaneously annealed in an oven. Furthermore, the high solvent content of lacquer compositions requires an additional drying step. Thus, conventional processes typically require multiple process steps to apply and dry the lacquer composition. This limits line speed and requires additional passes during production, thereby increasing cost.

The processes described herein, and various additional features and examples thereof, are described herein with reference to the drawings in which like numerals indicate like elements, and directional descriptions are used to describe the illustrative embodiments but, like the illustrative embodiments, should not be used to limit the present disclosure. The elements included in the illustrations herein may not be drawn to scale.

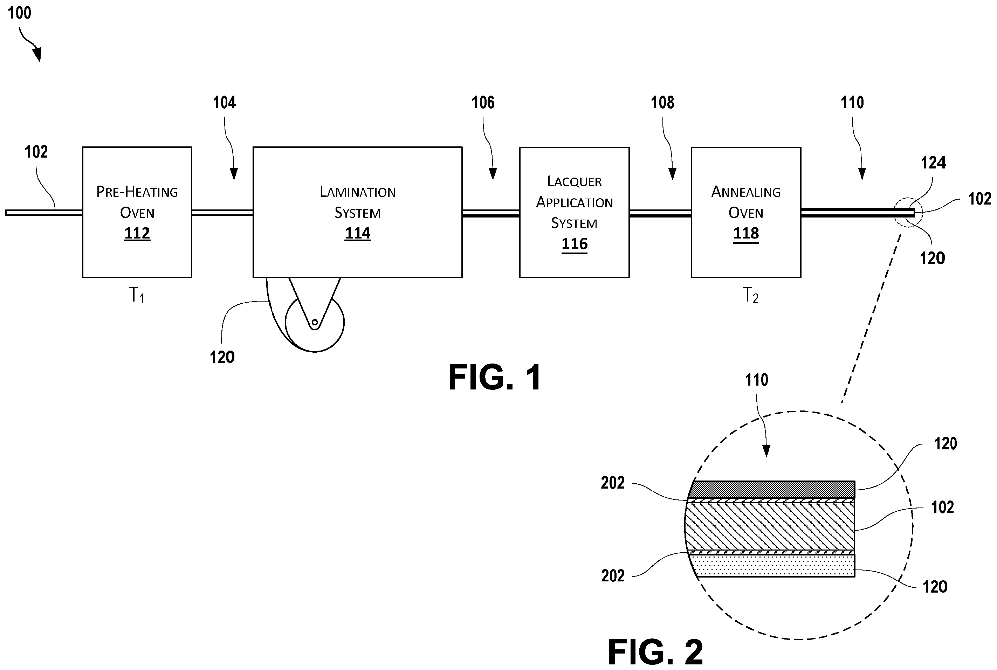

FIG. 1 is a schematic diagram of a system 100 for preparing can end stock (CES) according to certain aspects of the present disclosure. A metal strip 102 is passed into a pre-heating oven 112 that heats the metal strip 102 to a pre-heating temperature (T₁). The pre-heating temperature T₁ is well below the melting temperature of the polymer film 120 that will be laminated to the metal strip 102. In some embodiments, the pre-heating temperature T₁ is a temperature from 175 °C to 300 °C, e.g., from 175 °C to 290 °C, from 175 °C to 280 °C, from 175 °C to 270 °C, from 175 °C to 260 °C, from 175 °C to 250 °C, from 185 °C to 300 °C, from 185 °C to 290 °C, from 185 °C to 280 °C, from 185 °C to 270 °C, from 185 °C to 260 °C, from 185 °C to 250 °C, from 195 °C to 300 °C, from 195 °C to 290 °C, from 195 °C to 280 °C, from 195 °C to 270 °C, from 195 °C to 260 °C, from 195 °C to 250 °C, from 205 °C to 300 °C, from 205 °C to 290 °C, from 205 °C to 280 °C, from 205 °C to 270 °C, from 205 °C to 260 °C, from 205 °C to 250 °C, from 215 °C to 300 °C, from 215 °C to 290 °C, from 215 °C to 280 °C, from 215 °C to 270 °C, from 215 °C to 260 °C, from 215 °C to 250 °C, from 225 °C to 300 °C, from 225 °C to 290 °C, from 225 °C to 280 °C, from 225 °C to 270 °C, from 225 °C to 260 °C, or from 225 °C to 250 °C. In terms of lower limits, T₁ may be greater than 175 °C, e.g., greater than 185 °C, greater than 195 °C, greater than 205 °C, or greater than 215 °C. In terms of upper limits, T₁ may be less than 300 °C, e.g., less than 290 °C, less than 280 °C, less than 270 °C, less than 260 °C, or less than 250 °C.

In some embodiments, the surface of the metal strip 102 may be degreased (e.g., using an acid solution, such as sulfuric acid, hydrofluoric acid, phosphoric acid, or combinations thereof) to clean the surface before entering the pre-heating oven.

The pre-heated metal strip 104 passes into a lamination system 114. The metal strip 102, as a pre-heated metal strip 104, is passed through a lamination system 114 that applies a polymer film 120 to one side of the metal strip 102. In some cases, polymer film can be applied to both sides of the metal strip 102. The lamination system 114 can be any suitable system for laminating a polymer film 120 to the metal strip 102. In some cases, the lamination system 114 is a hot melt lamination system. A laminated metal strip 106 exits the lamination system 114, combining the metal strip 102 with a polymer film 120.

The laminated metal strip 106 passes into a lacquer application system 116. Before entering the lacquer application system 116, the laminated metal strip 106 may be cooled (e.g., air cooled or water quenched). Lacquer 124 is applied to the metal strip 102 by the lacquer application system 116. The lacquer application system 116 can be any suitable system for applying lacquer 124 to the metal strip 102. A lacquer application system 116 can include an oven for heating or curing the lacquer 124 onto the metal strip 102. In some cases, the lacquer application system 116 is downstream of (e.g., after) the lamination system 114. In some cases, the lacquer application system 116 is upstream of (e.g., before) the annealing oven 118. In some cases, the lacquer application system 116 is upstream of the lamination system 114 or the pre-heating oven 112. In some cases, the lacquer application system 116 is downstream of both the lamination system 114 and the annealing oven 118. In the embodiment shown in FIG. 1, the lacquer application system 116 is located between the lamination system 114 and the annealing oven 118. A laminated, lacquered metal strip 108 can exit the lacquer application system 116.

When an upstream lacquer application system 116 is used, laminated, lacquered metal strip 108 passes into an annealing oven 118.

The annealing oven 118 can be positioned downstream of (e.g., after) the lamination system 114 and the lacquer application system 116. In some cases, the annealing oven 118 is positioned immediately downstream of the lacquer application system 116, such that the lacquered, laminated metal strip 108 exiting the lacquer application system 116 passes into the annealing oven 118 before passing or coming into contact with other machinery or systems.

The annealing oven 118 raises the temperature of the lacquered, laminated metal strip 108 to an annealing temperature (T₂). In some embodiments, the annealing temperature T₂ is a temperature from 175 °C to 300 °C, e.g., from 175 °C to 290 °C, from 175 °C to 280 °C, from 175 °C to 270 °C, from 175 °C to 260 °C, from 175 °C to 250 °C, from 185 °C to 300 °C, from 185 °C to 290 °C, from 185 °C to 280 °C, from 185 °C to 270 °C, from 185 °C to 260 °C, from 185 °C to 250 °C, from 195 °C to 300 °C, from 195 °C to 290 °C, from 195 °C to 280 °C, from 195 °C to 270 °C, from 195 °C to 260 °C, from 195 °C to 250 °C, from 205 °C to 300 °C, from 205 °C to 290 °C, from 205 °C to 280 °C, from 205 °C to 270 °C, from 205 °C to 260 °C, from 205 °C to 250 °C, from 215 °C to 300 °C, from 215 °C to 290 °C, from 215 °C to 280 °C, from 215 °C to 270 °C, from 215 °C to 260 °C, from 215 °C to 250 °C, from 225 °C to 300 °C, from 225 °C to 290 °C, from 225 °C to 280 °C, from 225 °C to 270 °C, from 225 °C to 260 °C, or from 225 °C to 250 °C. In terms of lower limits, T₂ may be greater than 175 °C, e.g., greater than 185 °C, greater than 195 °C, greater than 205 °C, or greater than 215 °C. In terms of upper limits, T₂ may be less than 300 °C, e.g., less than 290 °C, less than 280 °C, less than 270 °C, less than 260 °C, or less than 250 °C.

The lacquered, laminated metal strip 108 spends a duration in the annealing oven 118 of sufficient length to impart the desired properties on the lacquered, laminated metal strip 108, including annealing of the metal strip 102 and desired adhesion of the polymer film 120. The duration within the annealing oven 118 can be based on oven length and the speed of the metal strip. In some cases, the duration can be within the range of approximately 2 seconds to approximately 30 seconds, approximately 9 seconds to approximately 15 seconds, approximately 10 seconds to approximately 14 seconds, or approximately 12 seconds. In some cases, the duration can be adjusted (e.g., by adjusting the metal strip speed) as necessary to compensate for changes in the temperature within the annealing oven 118.

After exiting the annealing oven 118, the can end stock 110 (i.e., annealed, lacquered and laminated metal strip) may optionally be quenched, such as with air or quenching liquid (e.g., water) or through application of coolant to the can end stock 110. The can end stock 110 can be cooled immediately after exiting the annealing oven 118, through quenching or otherwise.

The can end stock 110 produced by system 100 includes a metal strip 102 to which a layer of laminated polymer film 120 has been applied to a first side and to which a layer of lacquer 124 has been applied to a second side, as shown in FIGs. 1 and 2.

In some cases, the metal strip 102 can include one or more adhesion coating layers, as described above. In some embodiments, for example, the one or more adhesion coating layers may be pre-applied prior to entering the pre-heating oven 112 or the lamination system 114.

In some cases, a wax coating can be further applied to the can end stock 110 after exiting the annealing oven 118.

FIG. 2 is a close-up side view of the can end stock 110 of FIG. 1. The can end stock 110 includes metal strip 102 sandwiched between a laminated polymer film 120 and a layer of lacquer 124.

As noted above, in some cases, to prepare the metal strip to provide enhanced adhesion performance, one or more adhesion coating layers 202 may be applied on bare metal. This adhesion coating 202 can provide enhanced adhesion, low blushing after pasteurization, and good corrosion performance in the acetic acid test. In some cases, the metal strip 102 can include one or more adhesion coating 202 located between one or both of the laminated polymer film 120 and the layer of lacquer 124.

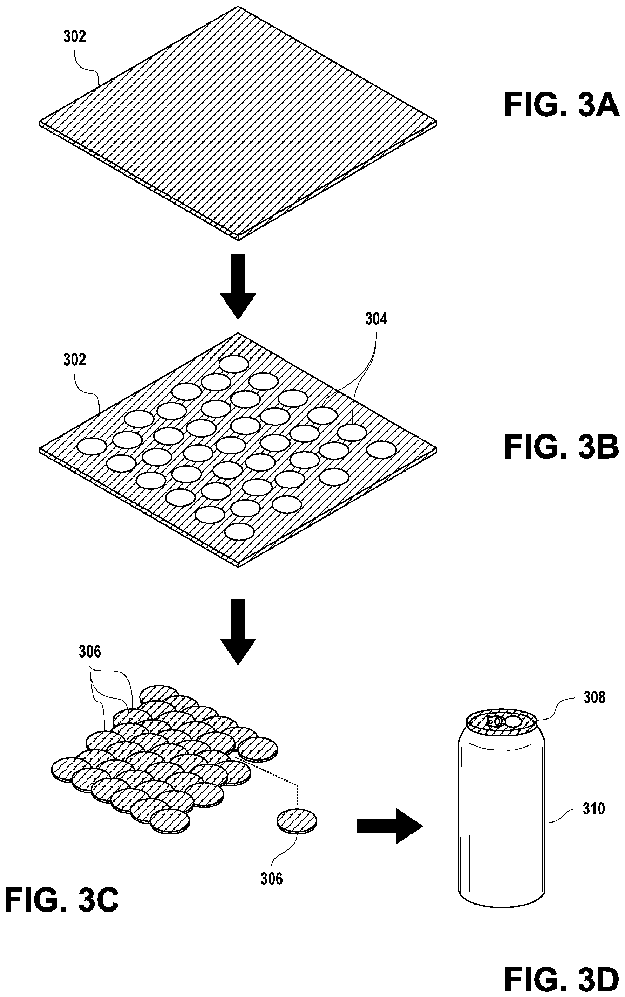

FIGs. 3A-3D are axonometric depictions of can end stock 302 in various stages of production. In some cases, the can end stock 302 is the can end stock as described herein, including laminated polymer film and lacquer.

FIG. 3A is a sheet of can end stock 302 according to certain aspects of the present disclosure. The sheet of can end stock 302 can be can end stock 110 depicted in FIG. 1, or a similar can end stock. FIG. 3B depicts the sheet of can end stock 302 of FIG. 3A after it is cut. The sheet of can end stock 302 can be die cut, punched, or otherwise cut to produce can end blanks 306 as shown in FIG. 3C. FIG. 3C depicts a set of can end blanks 306 produced from the sheet of can end stock of FIG. 3A. FIG. 3D depicts a beverage can 310 including a can end 308 formed from a can end blank 306 from FIG. 3C.

The can end 308 includes an exterior-facing side (e.g., visible in FIG. 3D) and an interior-facing side (e.g., facing the interior of the beverage can 310). As described herein, the can end 308 is formed such that a laminated polymer film is present on the exterior-facing side while a layer of lacquer is present on the interior-facing side.

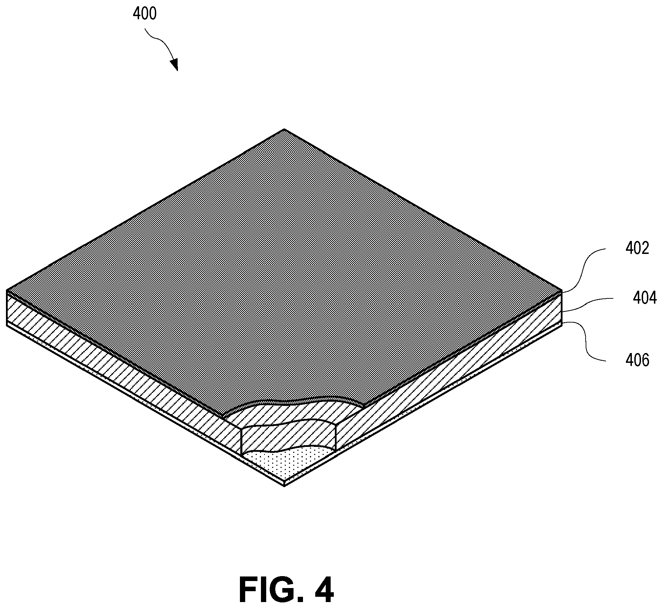

FIG. 4 is an isometric cutaway diagram depicting the multiple layers of a section of can end stock 400 prepared according to the present disclosure. The can end stock 400 includes a layer of metal 404, i.e. aluminum (e.g., an aluminum alloy) surrounded by a laminated polymer film 402, and a layer of lacquer 406. The can end stock 400 can be the can end stock 110 of FIG. 1.

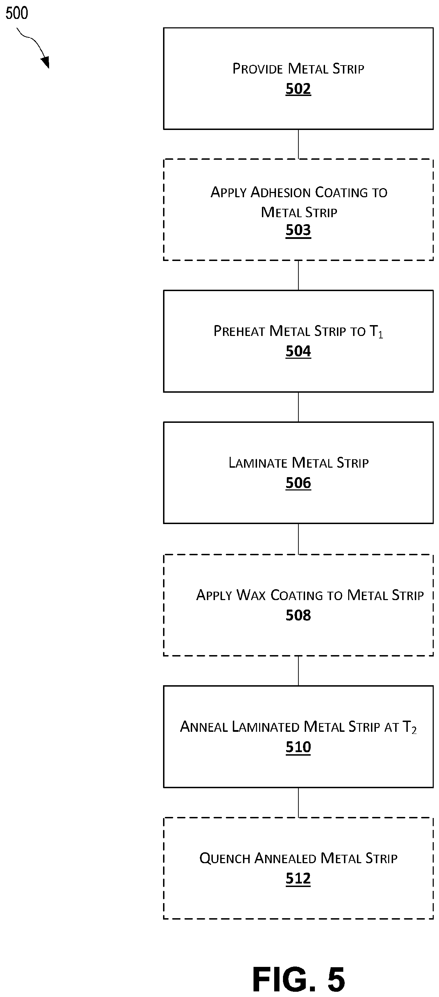

FIG. 5 is a flowchart depicting a process 500 for preparing can end stock according to embodiments of the present disclosure. At block 502, the metal strip is provided. The metal strip is an aluminum strip suitable for forming can end stock. The surface of the metal strip may optionally be degreased (e.g., using an acid solution). At block 503, an adhesion coating is optionally applied to the metal strip. At block 504, the metal strip is pre-heated to a pre-heating temperature T₁. At block 506, the metal strip is laminated with a polymer film, i.e. a PET film. At block 508, a wax coating is optionally applied to one or both sides of the metal strip. At block 510, the laminated metal strip is annealed at an annealing temperature T₂. At block 512, the annealed metal strip is optionally quenched.

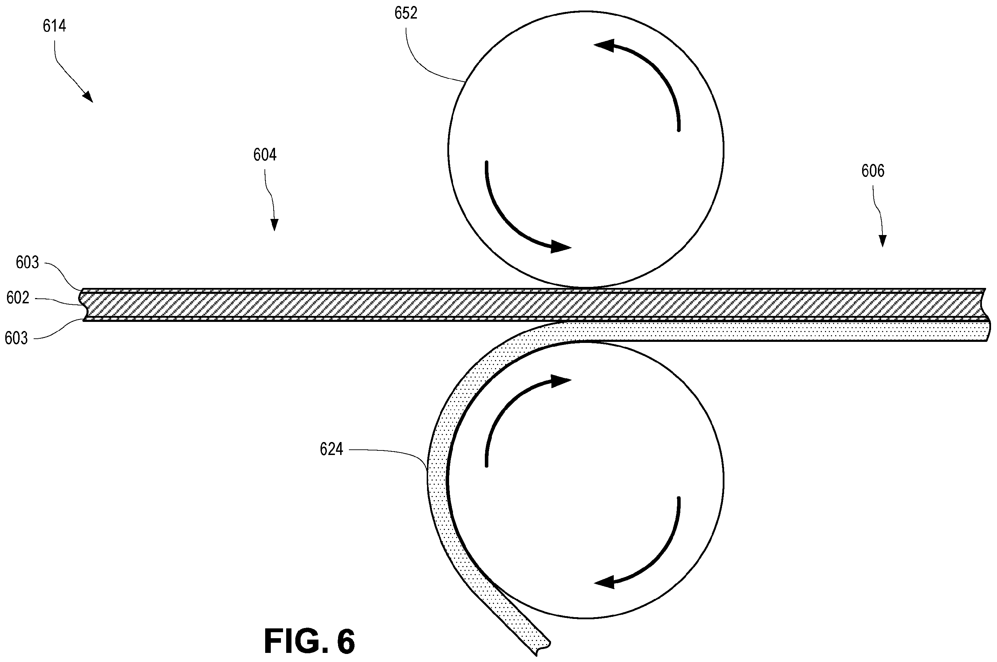

FIG. 6 is a schematic diagram of a lamination system 614 according to certain aspects of the present disclosure. The lamination system 614 can be the lamination system 114 of FIG. 1, or another lamination system. Certain elements depicted in FIG. 6 are shown at an exaggerated scale for demonstrative purposes only.

The lamination system 614 can include a pair of rollers 652 through which a pre-heated metal strip 604 may pass. The rollers 652 may be comprises of any suitable material, such as rubber or metal (e.g., steel). In some cases, one of the rollers 652 (e.g., the roller on the polymer film side) is comprised of rubber, and other of the rollers 652 (e.g., the roller on the opposite side) is comprised of steel. The pre-heated metal strip 604 can include a metal strip 602 that has been pre-heated, such as by a pre-heating oven 112 of FIG. 1. In some cases, the pre-heated metal strip 604 includes one or more conversion layers 603.

When passing through the rollers 652, a polymer film 624 can be pressed against the pre-heated metal strip 604 to produce a laminated metal strip 606. In some cases, a single lamination system 614 can include additional sets of rollers to apply a second polymer film to an opposite side of the pre-heated metal strip 604 from the polymer film 624. In some cases, rollers 652 can additionally apply a second polymer film to an opposite side of the pre-heated metal strip 604 from the polymer film 624.

### Properties of Can End Stock

As noted above, the can end stock of the present disclosure, e.g., the can end stock produced according to the described processes, advantageously exhibits a number of improved properties.

In some embodiments, the can end stock of the present disclosure exhibits low hairing. As defined above, hairing refers to the formation of visible hair-like deformations in a protective layer (e.g., polymer film) on the metal strip, especially at breaks in the metal, such as the orifice created when opening a beverage can. In developing the can end stock of the present disclosure, hairing was found to be particularly problematic. In some cases, hairing may be visible and causes the can end stock to be unsightly and inappropriate for commercial uses. In some cases, hairing may contribute to corrosion of the can end stock. In early testing (detailed below), can end stock having a polymer film on an exterior surface exhibited hairing.

The can end stock of the present disclosure, however, overcomes the problem of hairing . In some embodiments, the can end stock exhibits no major (e.g., visible) hairing. In particular, embodiments of the can end stock having colored (e.g., black or white) polymer films were particularly resistant to hairing. In some cases, a can end stock comprising a colorless (e.g., clear) exterior coating exhibited hairing in the score-line area during can opening. Embodiments comprising a colored (e.g., black or white) polymer film exhibit a much reduced tendency for hairing. Without being bound by theory, it is believed that the particles of colorant (e.g., carbon black or titanium dioxide) in the polymer film facilitate a smooth film break.

In some aspects, the can end stock exhibits low or no hairing during the can end making process. For example, during the stamping of a score-line (e.g., in a V-shape), a conventional can end may be particularly susceptible to hairing. The can end stock of the present disclosure, however, exhibits low or no hairing during such a process.

In some aspects, the can end stock exhibits low or no hairing during opening. Here we have a test in the origin condition and after a pasteurization process. For example, when a beverage can is opened, a conventional can end may be particularly susceptible to hairing. The can end stock of the present disclosure, however, exhibits low or no hairing during such a process.

In some embodiments, the can end stock of the present disclosure exhibits improved adhesion. In some cases, for example, the can end stock of the present disclosure exhibits improved results on a 3% acetic acid test. As used herein, a 3% acetic acid test can include assessing the resistance of a coating against diluted acidic media at approximately 100 °C for 30 minutes. The test can include cutting crosshatched markings into samples and placing the samples into a 3% acetic acid solution at approximately 100 °C for 30 minutes, after which the samples are removed and cooled down. After cooling, an additional set of cross cuts are performed on each sample, and adhesive tape is placed over the pre- and post-acid bath crosshatched regions and removing the tape steadily in 0.5 to 1 second at an angle of approximately 60°. The results of the test (e.g., based on the presence of and intensity of delamination) can be used to determine if the metal strip is acceptable or unacceptable given the desired specifications. The degree of delamination is observed and, to the extent delamination occurs, valued on a scale from 1 (minimal delamination) to 5. As used herein, a sample passes the 3% acetic acid test if the sample demonstrates no or low delamination.

Conventional metal strips (e.g., metal strip having a layer of lacquer applied to an external surface) often score poorly on a 3% acetic acid test. In some cases, the annealed, laminated can end stock disclosed herein obtain more favorable results in the 3% acetic acid tests (e.g., no or low delamination) than a standard, lacquered can end stock. In some embodiments, the can end stock disclosed herein passes the 3% acetic acid test with low delamination. In some cases, the annealed, laminated can end stock disclosed herein passes 3% acetic acid tests without delamination.

In some embodiments, the can end stock of the present disclosure exhibits reduced feathering. In some cases, for example, the can end stock of the present disclosure exhibits improved results on a standard feathering test. As used herein, a standard feathering test can be conducted on a can end and may include immersing a can end in a bath of deionized water at approximately 75 °C for thirty minutes, rinsing the can end in cool deionized water to return the can end to room temperature, and then immediately opening the end tab of the can end. Feathering can be observed and measured on the scored panel or pour hole opening. In some cases, a feathering test can be conducted on a flat sheet of metal, such as a flat sheet of can end stock. In such cases, the feathering test can include immersing the sample in demineralized water at 80 °C for forty minutes, after which the sample is allowed to cool down to room temperature and the sample can be cut and a strip of metal can be separated by pulling the strip in a direction away from the cut. In either feathering test, the amount of feathering can be measured, and the can end stock exhibiting a maximum amount of feathering less than 0.7 mm is said to pass the test.

In some examples, the can end stock described herein passes a standard feathering test. In some embodiments, the can end stock exhibits a maximum amount of feathering of less than 0.7 mm, e.g., less than 0.6, less than 0.5 mm, less than 0.4 mm, less than 0.3 mm, or less than 0.2 mm. This amount of feathering may be located at certain indicative positions along the orifice of the opened can end. The amount of feathering of the film also depends on the cutting, forming and stamping tool design of the product.

In some embodiments, the can end stock of the present disclosure exhibits improved abrasion resistance. In some cases, for example, the can end stock exhibits less than 0.25% weight less after exposure to 2000 cycles of rub-abrasion, e.g., less than 0.2%, less than 0.15%, less than 0.14%, less than 0.13%, less than 0.12%, less than 0.11%, or less than 0.1%.

### EXAMPLES

The following examples will serve to further describe the present invention without, however, constituting any limitation thereof.

### Example 1: Can End Stock

Several samples of can end stock were prepared according to the disclosed methods. The samples were prepared using an AA5182 aluminum alloy with a gauge of 0.208 mm as the metal strip. Each of the samples tested is shown in Table 1. Each sample was pretreated, as indicated in Table 1, and can end stock was prepared by laminating a polymer film to a first side (external), applying a layer of lacquer to the second side (internal), and annealing at an annealing temperature. A comparative sample (A) was also prepared using an AA5182 aluminum alloy but by applying a layer of lacquer to the first side (external), laminating a polymer film to the second side (internal), and annealing at an annealing temperature.

**TABLE 1**

| **Sample** | **Pretreatment** | **External Coating** | **Internal Coating** | **Annealing Temperature** |
|---|---|---|---|---|
| **1*** | Cr3 | White PET film (18 µm) | Clear PET Film (6 µm) | 250°C |
| **2*** | Cr3 | White PET film (18 µm) | Clear PET Film (6 µm) | 265°C |
| **3** | Copolymer | White PET film (18 µm) | Epoxy Lacquer (9 µm) | 235°C |
| **4** | Copolymer | White PET film (18 µm) | Epoxy Lacquer (9 µm) | 250°C |
| **5** | Copolymer | Black PET film (12 µm) | Epoxy Lacquer (9 µm) | 240°C |
| **6** | Copolymer | Black PET film (12 µm) | Epoxy Lacquer (9 µm) | 260°C |
| **7** | Copolymer | White PET film (12 µm) | Epoxy Lacquer (9 µm) | 250°C |
| **8*** | Copolymer | Clear PET Film (6 µm) | Clear PET Film (6 µm) | 235°C |
| **9*** | Cr3 | Clear PET Film (6 µm) | Clear PET Film (6 µm) | 235°C |
| **A** | Cr3 | White Epoxy Lacquer | Epoxy Lacquer (9 µm) | 250°C |
| **B** | Cr3 | Black Epoxy Lacquer | Epoxy Lacquer (9 µm) | 250°C |

| | | | | |
|---|---|---|---|---|
| * not according to the invention | | | | |

To evaluate the performance of the above sample can end stock, various tests were performed. To assess adhesion, each sample was tested according to the 3% acetic acid test, described above. To the extent delamination was observed, it was valued on a scale from 1 (minimal delamination) to 5. A rating of 1 indicates that no delamination was observed. A rating of 2 indicates that the delaminated area was less than 5% of the sample. A rating of 3 indicates that the delaminated area was from 5% to 15% of the sample. A rating of 4 indicates that the delaminated area was greater than 15% of the sample. A rating of 5 indicates that the sample exhibited complete delamination. A rating of 1 or 2 is considered a pass, a rating of 3 is considered borderline, and a rating of 4 or 5 is considered a fail. The results of this test are shown in Table 2.

To assess feathering, the above-described test was carried out by immersing the sample in demineralized water at 80 °C for forty minutes. A sample from the exemplary can end stock was tested before and after pasteurization. Maximum feathering less than 0.7 mm is considered a pass, maximum feathering from 0.7 to 0.8 mm is considered borderline, and maximum feathering greater than 0.8 mm is considered a fail. The results of this test are also shown in Table 2.

To assess hairing, the can end stock was observed for visible hairing during seaming and/or opening. Each sample was assigned a ranking from 1 to 3. A rating of 1 indicates that no hairs are visible and is considered a pass. A rating of 2 indicates that small hairs are visible and is considered borderline. A rating of 3 indicates that long hairs are visible and is considered a fail. The results of these tests are shown in Table 3.

**TABLE 2**

| **Sample** | **Acetic Acid Test** | | **Max. Feathering (mm)** | | **Hairing** |
|---|---|---|---|---|---|
| | Cross-Cut Before | Cross-Cross After | Before Past. | After Past. | |
| **1** | No delam. | 1 | 1.1 | 1.4 | 3 |
| **2** | No delam. | 1 | 0.9 | 1.2 | 3 |
| **3** | No delam. | 1 | 0.3 | 0.3 | 1 |
| **4** | No delam. | 1 | 0.3 | 0.3 | 1 |
| **5** | No delam. | 1 | 0.2 | 0.3 | 1 |
| **6** | No delam. | 1 | 0.2 | 0.3 | 1 |
| **7** | No delam. | 1 | 0.1 | 0.2 | 1 |
| **8** | No delam. | 2 | 1.0 | 0.6 | 2 |
| **9** | No delam. | 5 | 1.1 | 1.4 | 3 |

The tested samples (Samples 1-9) demonstrated excellent adhesion, low susceptibility to feathering, and no visible hairing.

To assess resistance to abrasion, each sample was tested using a Taber Abraser from Taber Indus. (Tonawanda, NY), which applied rub-wear to the samples with two abrading wheels. The test samples were cut to 10 x 10 cm with a punched hole to fix the sample to the machine, and exposed to 2000 cycles of the Taber Abraser. The weight before and after the test was measured, and the percentage of weight lost was measured. Three samples from the several exemplary can end stock were tested, and the average weight loss is reported in Table 3.

**TABLE 3**

| **Sample** | **Abrasion Weight Loss (%)** |
|---|---|
| **5** | 0.07 |
| **7** | 0.09 |
| **A** | 0.18 |
| **B** | 0.23 |

The tested samples (Samples 5 and 7) demonstrated high resistance to abrasion, particularly as compared to the comparative samples (Samples A and B).

## Claims

1. A process for preparing can end stock (110, 302), comprising:
pre-heating a metal strip (102) to a first temperature below 250 °C, wherein the metal strip (102) is an aluminum strip;
laminating a polymer film (120) to a first side of the metal strip (102) to produce a laminated metal strip (106), wherein the first side of the metal strip (102) corresponds to an exterior-facing side of a can end formed from the metal strip, wherein the polymer film (120) comprises a polyethylene terephthalate film and wherein the polymer film (120) comprises a colorant selected from the group consisting of carbon black and titanium dioxide,
applying a layer of lacquer (124) to a second side of the metal strip (102), wherein the second side of the metal strip (102) corresponds to an interior-facing side of a can end formed from the metal strip, wherein the lacquer (124) comprises an epoxy-based solution, a polyester solution, or a combination thereof; and
annealing the laminated metal strip (108) at an annealing temperature, wherein the annealing temperature is greater than 175 °C.

2. The process of claim 1, further comprising applying an adhesion coating (202) to the metal strip (102), wherein laminating the polymer film (120) to the first side of the metal strip (102) includes laminating the polymer film (120) to the adhesion coating (202).

3. The process of any one of claims 1 or 2, wherein the annealing temperature is greater than 225 °C; and/or
wherein the annealing temperature is less than 300 °C.

4. The process of any one of claims 1-3, further comprising cooling the laminated metal strip (110) after annealing the laminated metal strip (108); and/or
further comprising applying a lubricant to the laminated metal strip (110) after annealing the laminated metal strip (108).

5. A can end stock product (110, 302) prepared according to the process of any one of claims 1-4.

6. The can end stock product (110, 302) of claim 5, wherein the first side of the metal strip (102) corresponds to an exterior-facing side of the can end stock product (110, 302); and/or
wherein the polymer film (120) has a thickness less than 150 µm.

7. A beverage can (310) comprising a body piece and an end cap (308), wherein the end cap (308) is formed from can end stock (110, 302) prepared according to the process of any one of claims 1-4.

## Patentansprüche

1. Verfahren zum Vorbereiten eines Dosenendmaterials (110, 302), umfassend:
Vorwärmen eines Metallstreifens (102) auf eine erste Temperatur unter 250 °C, wobei der Metallstreifen (102) ein Aluminiumstreifen ist;
Laminieren einer Polymerfolie (120) auf eine erste Seite des Metallstreifens (102), um einen laminierten Metallstreifen (106) zu erzeugen, wobei die erste Seite des Metallstreifens (102) einer nach Außen gerichteten Seite eines Dosenendes entspricht, welches aus dem Metallstreifen gebildet ist, wobei die Polymerfolie (120) eine Polyethylenterephthalat-Folie umfasst, und wobei die Polymerfolie (120) einen Farbstoff umfasst, welcher aus der Gruppe ausgewählt ist, bestehend aus Kohlenschwarz und Titandioxid,
Aufbringen einer Schicht aus Lack (124) auf eine zweite Seite des Metallstreifens (102), wobei die zweite Seite des Metallstreifens (102) einer nach Innen gerichteten Seite eines Dosenendes entspricht, welches aus dem Metallstreifen gebildet ist, wobei der Lack (124) eine epoxidbasierte Lösung, eine Polyesterlösung oder eine Kombination davon umfasst; und
Härten des laminierten Metallstreifens (108) bei einer Härtungstemperatur, wobei die Härtungstemperatur höher als 175 °C ist.

2. Verfahren nach Anspruch 1, ferner umfassend ein Aufbringen einer Adhäsionsbeschichtung (202) an dem Metallstreifen (102), wobei ein Laminieren der Polymerfolie (102) auf die erste Seite des Metallstreifens (102) ein Laminieren der Polymerfolie (120) auf die Adhäsionsbeschichtung (202) umfasst.

3. Verfahren nach Anspruch 1 oder 2, wobei die Härtungstemperatur höher als 225 °C ist; und/oder
wobei die Härtungstemperatur niedriger als 300 °C ist.

4. Verfahren nach einem der Ansprüche 1-3, ferner umfassend ein Kühlen des laminierten Metallstreifens (110) nach einem Härten des laminierten Metallstreifens (108); und/oder
ferner umfassend ein Aufbringen eines Schmiermittels auf dem laminierten Metallstreifen (110), nach einem Härten des laminierten Metallstreifens (108).

5. Dosenendmaterial-Produkt (110, 302), vorbereitet gemäß dem Verfahren nach einem der Ansprüche 1-4.

6. Dosenendmaterial-Produkt (110, 302) nach Anspruch 5, wobei die erste Seite des Metallstreifens (102) einer nach Außen gerichteten Seite des Dosenendmaterial-Produkts (110, 302) entspricht, und/oder
wobei die Polymerfolie (120) eine Dicke von weniger als 150 µm aufweist.

7. Getränkedose (310), umfassend einen Körperteil und eine Endkappe (308), wobei die Endkappe (308) aus einem Dosenendmaterial (110, 302) gebildet ist, welches gemäß dem Verfahren nach einem der Ansprüche 1-4 vorbereitet ist.

## Revendications

1. Procédé de préparation d'un matériau brut pour extrémité de boîte métallique (110, 302), comprenant:
le préchauffage d'une bande métallique (102) à une première température inférieure à 250°C, où la bande métallique (102) est une bande d'aluminium;
l'application par laminage d'un film polymère (120) sur un premier côté de la bande métallique (102) pour produire une bande métallique laminée (106), où le premier côté de la bande métallique (102) correspond à un côté tourné vers l'extérieur d'une extrémité de boîte métallique formée à partir de la bande métallique, où le film polymère (120) comprend un film de polyéthylène téréphtalate et où le film polymère (120) comprend un colorant choisi dans le groupe consistant en le noir de carbone et le dioxyde de titane,
l'application d'une couche de laque (124) sur un second côté de la bande métallique (102), où le second côté de la bande métallique (102) correspond à un côté tourné vers l'intérieur d'une extrémité de boîte métallique formée à partir de la bande métallique, où la laque (124) comprend une solution à base d'époxy, une solution de polyester, ou une combinaison de celles-ci; et
le recuit de la bande métallique laminée (108) à une température de recuit, où la température de recuit est supérieure à 175°C.

2. Procédé selon la revendication 1, comprenant en outre l'application d'un revêtement d'adhérence (202) sur la bande métallique (102), où l'application par laminage du film polymère (120) sur le premier côté de la bande métallique (102) inclut l'application par laminage du film polymère (120) sur le revêtement d'adhérence (202).

3. Procédé selon l'une quelconque des revendications 1 ou 2, où la température de recuit est supérieure à 225°C; et/ou
où la température de recuit est inférieure à 300°C.

4. Procédé selon l'une quelconque des revendications 1 à 3, comprenant en outre le refroidissement de la bande métallique laminée (110) après le recuit de la bande métallique laminée (108); et/ou
comprenant en outre l'application d'un lubrifiant sur la bande métallique laminée (110) après le recuit de la bande métallique laminée (108).

5. Produit formant matériau brut pour extrémité de boîte métallique (110, 302) préparé selon le procédé selon l'une quelconque des revendications 1 à 4.

6. Produit formant matériau brut pour extrémité de boîte métallique (110, 302) selon la revendication 5, où le premier côté de la bande métallique (102) correspond à un côté tourné vers l'extérieur du produit formant matériau brut pour extrémité de boîte métallique (110, 302); et/ou
où le film polymère (120) a une épaisseur inférieure à 150 µm.

7. Boîte métallique pour boisson (310) comprenant une pièce formant corps et un couvercle d'extrémité (308), où le couvercle d'extrémité (308) est formé à partir du matériau brut pour extrémité de boîte métallique (110, 302) préparé selon le procédé selon l'une quelconque des revendications 1 à 4.
